# EUROPEAN PATENT SPECIFICATION

(11) **EP 3 118 392 B1**
(45) Date of publication and mention of the grant of the patent: **21.11.2018**
(21) Application number: 15762371.1
(22) Date of filing: 11.03.2015
(51) Int. Cl.: E04H 4/14, F21S 9/03, H01L 31/00, F21W 131/401, F21S 8/00, F21V 23/04, F21V 15/01, F21Y 101/00

(54) **SUBMERSIBLE SOLAR LIGHTING SYSTEM**
TAUCHFÄHIGES SOLARBELEUCHTUNGSSYSTEM
SYSTÈME D'ÉCLAIRAGE SOLAIRE SUBMERSIBLE

(30) Priority: 12.03.2014 ES 201400214
(43) Date of publication of application: 18.01.2017
(73) Proprietor: Rosado Rios, Juan, 29631 Benalmadena (ES)
(72) Inventor: Rosado Rios, Juan, 29631 Benalmadena (ES)
(74) Representative: Isern Patentes y Marcas S.L.
(86) International application number: PCT/ES2015/000033
(87) International publication number: WO 2015/136129

(56) References cited:
- EP-A2- 1 515 087
- WO-A1-2013/080836
- WO-A1-2013/080836
- CN-U- 202 266 969
- CN-Y- 200 958 714
- DE-U1-202008 010 670
- US-A1- 2003 048 632
- US-A1- 2006 152 915
- US-A1- 2006 152 915
- US-A1- 2010 109 556
- US-A1- 2010 109 556
- US-A1- 2011 174 897
- US-A1- 2014 218 900

## Description

### OBJECT OF THE INVENTION

The invention, as stated in the title of the present specification, describes a submersible solar lighting system chiefly intended for swimming pools that lack lighting.

More specifically, the object of the invention of the patent consists of a submersible solar lighting system according to claim 1.

### BACKGROUND OF THE INVENTION

Currently there are a large number of solar lighting systems for swimming pools that are equipped with a photovoltaic panel that charges a battery or accumulator during the day and a lighting system that activates during the night. Said systems tend to be designed to float on the surface of the water, such that the area that remains afloat contains the solar panels and the submerged portion contains the lighting system to be able to light up the bottom of the swimming pool, and in order for the accumulators to recharge, they must be floating during the day in the swimming pool, thus limiting the use thereof since they are floating on the surface.

There are also systems that consist of placing the photovoltaic solar panel outside the swimming pool and provide the lighting devices inside the swimming pool with electric power via a wiring installation.

DE 20 2008 010 670 U1 and US 2010/0109556 disclose submersible solar lighting systems according to the preamble of claim 1.

### DESCRIPTION OF THE INVENTION

The device described herein comprises a solar gain system formed by photovoltaic cells that enable batteries to be charged during daylight hours, as well as a lighting system that automatically activates during the hours of darkness via an electronic circuit. The photovoltaic solar cell and lighting system assembly are mounted on the same front plane of the device, covered by a transparent material that enables both light input to the photovoltaic panels and light output through the lighting system. Below these are the batteries and the electronic control circuit in a unit injected with material adhered underneath the solar gain and lighting system, forming a single solid and sealed unit with a slim profile, thus enabling it to not interfere with the use of the swimming pool once adhered or fastened therein and not requiring wiring installation.

### DESCRIPTION OF THE DRAWINGS

To complete the present description, and for the purpose of aiding in a better understanding of the characteristics of the invention, a set of drawings is attached to the present specification as an integral part thereof, wherein, by way of non-limiting examples, the following has been represented:
Figure 1 shows a front view of the device wherein the solar gain system comprised by a series of photovoltaic panels and the lighting system may be seen.
Figure 2 shows a transverse cross section of the device wherein the placement of the photovoltaic panels and the lighting system, as well as the controller circuit and the battery may be seen, all of which are inside a protective material, forming a sealed, thin unit without edges on the front portion thereof.

### PREFERRED EMBODIMENT OF THE INVENTION

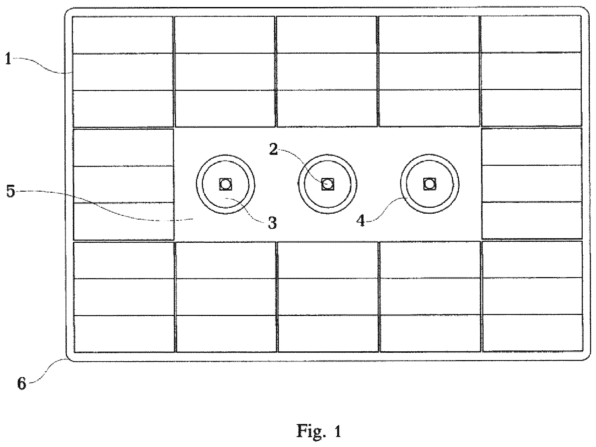

Figure 1 shows a front view of the device wherein the arrangement of the photovoltaic solar panels (1) used to capture light may be seen, and in turn the light emitters (2) may be seen mounted on a refracting surface (3) surrounded by an opaque barrier (4) that prevents the light generated by the light emitters (2) from propagating to the photovoltaic panels (1) through the transparent and solid protective material (9) that forms the front of the device, and in turn the design of the rounded corners (6) may be seen.

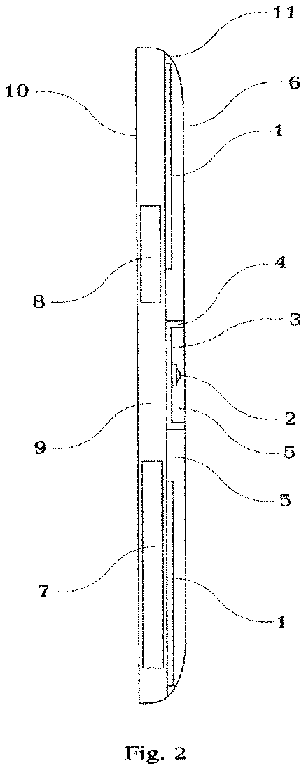

Figure 2 shows a transverse cross section of the device wherein the front face (6) of the photovoltaic panels (1) and the light emitters (2) that are arranged on a refracting surface (3) may be seen, the refracting surface being surrounded by an opaque barrier (4) that prevents the light generated by the light emitters (2) from propagating through the transparent and solid protective material (9) that forms the front of the device towards the photovoltaic panels (1), these being responsible for charging the batteries (7) during daylight hours, the control circuit (8) being responsible for turning the lighting system (2) on and off according to the light present, as well as controlling the charging and discharging of the batteries (7). The control circuit (8) and the batteries (7) are in turn found inside a solid and protective material (9) that may be similar to the material of the front portion (5), the connection of both making the assembly a single solid and sealed unit which may be adhered, fastened or placed inside the swimming pool on the rear face (10). One may also see the rounded shape (11) of the front vertices of the device to prevent the possibility of harming the swimming pool users.

### List of references

- 1: panel
- 2: light emitter
- 3: refracting surface
- 4: opaque barrier
- 5: front portion
- 6: corner
- 7: battery
- 8: control circuit
- 9: protective material
- 10: rear face
- 11: rounded shape

## Claims

1. A submersible solar lighting system that incorporates a battery (7) charging system via photovoltaic solar panels (1), batteries (7) and a lighting system with an automatic activation control circuit (8) in one and the same sealed, thin planar unit that allows illumination during the night, and which has a slim design such that it can be adhered or fastened to the wall, steps or bottom of a swimming pool, allowing convenient wiring-free installation that does not interfere with the use of the pool, wherein the photovoltaic panels (1) and the lighting system are found on the same plane, **characterised in that** the lighting system has a reflective area (3) comprising a perimeter (4) built with opaque material that prevents the light emitted by the lighting system from propagating through a transparent material that makes up the front portion (5) and reaching the photovoltaic panels (1).

2. The submersible solar lighting system according to claim 1, **characterised in that** the assembly thereof has a thin design that is free of edges so as to not interfere with the use of the space it occupies.

3. The submersible solar lighting system according to claim 1, **characterised in that** it is built from a material that, whether injection moulded or by any other method, incorporates all the components thereof such that it forms a solid and sealed unit.

4. The submersible solar lighting system according to claim 1, **characterised in that** the front surface that houses the photovoltaic panels (1) and the lighting system is covered by a transparent material, whether injection moulded or by any other method.

## Patentansprüche

1. Tauchfähiges Solarbeleuchtungssystem, welches ein Ladesystem für Batterien (7) über photovoltaische Solarpaneele (1), Batterien (7) und ein Beleuchtungssystem mit einer automatisch aktivierenden Steuerschaltung (8) in ein und derselben abgedichteten, dünnen, ebenen Einheit einschließt, welche die Beleuchtung in der Nacht ermöglicht und welche eine schmale Bauweise hat, sodass sie an der Wand, den Stufen oder dem Boden eines Schwimmbeckens befestigt werden kann, indem sie eine bequeme kabellose Installation ermöglicht, welche die Verwendung des Schwimmbeckens nicht beeinflusst, wobei sich die photovoltaischen Paneele (1) und das Beleuchtungssystem auf derselben Ebene befinden, **dadurch gekennzeichnet, dass** das Beleuchtungssystem einen spiegelnden Bereich (3) hat, welcher einen Durchmesser (4) umfasst, der mit einem lichtundurchlässigen Material hergestellt ist, welches verhindert, dass sich das durch das Beleuchtungssystem emittierte Licht durch ein lichtdurchlässiges Material, welches den vorderen Teil (5) bildet, verbreitet und die photovoltaischen Paneele (1) erreicht.

2. Tauchfähiges Solarbeleuchtungssystem nach Anspruch 1, **dadurch gekennzeichnet, dass** die Ausgestaltung davon eine schmale Bauweise hat, welche frei von Kanten ist, um die Verwendung des von ihr eingenommenen Raums nicht zu stören.

3. Tauchfähiges Solarbeleuchtungssystem nach Anspruch 1, **dadurch gekennzeichnet, dass** es aus einem Material hergestellt ist, das, hergestellt entweder durch Spritzgießen oder durch jedes andere Verfahren, alle Bestandteile davon einschließt, sodass es eine feste und abgedichtete Einheit bildet.

4. Tauchfähiges Solarbeleuchtungssystem nach Anspruch 1, **dadurch gekennzeichnet, dass** die vordere Fläche, welche die photovoltaischen Paneele (1) und das Beleuchtungssystem aufnimmt, durch ein lichtdurchlässiges Material, welches entweder durch Spritzgießen oder durch jedes andere Verfahren hergestellt ist, bedeckt ist.

## Revendications

1. Système d'éclairage solaire submersible qui incorpore un système de chargement de batteries (7) moyennant des panneaux solaires photovoltaïques (1), des batteries (7) et un système d'éclairage avec un circuit de commande d'activation automatique (8) dans une seule et même unité plate fine hermétique qui permet l'illumination pendant la nuit, et qui a une conception mince de sorte à pouvoir être adhéré ou fixé au mur, aux marches ou au fond d'une piscine, permettant une installation pratique sans câblage qui n'interfère pas avec l'utilisation de la piscine, dans lequel les panneaux photovoltaïques (1) et le système d'éclairage se trouvent sur le même plan, **caractérisé en ce que** le système d'éclairage a une zone réfléchissante (3) comprenant un périmètre (4) fabriqué avec du matériau opaque qui empêche la lumière émise par le système d'éclairage de se propager à travers un matériau transparent qui compose la partie avant (5) et d'atteindre les panneaux photovoltaïques (1).

2. Système d'éclairage solaire submersible selon la revendication 1, **caractérisé en ce que** l'assemblage de celui-ci a une conception fine qui est exempte de bords de sorte à ne pas interférer avec l'utilisation de l'espace qu'il occupe.

3. Système d'éclairage solaire submersible selon la revendication 1, **caractérisé en ce qu'**il est fabriqué à partir d'un matériau qui, soit moulé par injection soit par tout autre procédé, incorpore tous les composants de celui-ci de sorte à former une unité solide et hermétique.

4. Système d'éclairage solaire submersible selon la revendication 1, **caractérisé en ce que** la surface avant qui loge les panneaux photovoltaïques (1) et le système d'éclairage est recouverte d'un matériau transparent, soit moulé par injection soit par tout autre procédé.
